# EUROPEAN PATENT SPECIFICATION

(11) **EP 2 492 521 B1**
(45) Date of publication and mention of the grant of the patent: **20.04.2016**
(21) Application number: 12150573.9
(22) Date of filing: 10.01.2012
(51) Int. Cl.: F16B 21/08

(54) **Retaining element for attachment in a hole**
Halteelement zur Befestigung in einem Loch
Élément de rétention pour fixation dans un trou

(30) Priority: 24.02.2011 DE 202011000437 U
(43) Date of publication of application: 29.08.2012
(73) Proprietor: Newfrey LLC, 1000 Stanley Drive New Britain US-CT 06053 (US)
(72) Inventor: Malarcane, Marco, 10023 Chieri (Torino) (IT)
(74) Representative: Haar, Lucas Heinz Jörn

(56) References cited:
- EP-A2- 0 064 768
- EP-A2- 0 365 161
- DE-A1- 19 607 516

## Description

The Invention relates to a retaining element for attachment in a hole of a workpiece, with a shaft that has a head end, a foot end, and a longitudinal axis, with at least one elastically flexible retaining arm that is attached to the shaft and projects obliquely from the longitudinal axis of the shaft, and with at least one support element that is located to the side of the at least one retaining arm facing the foot end and at a distance therefrom, and forms a support for the retaining arm.

Retaining elements of the specified type are used, particularly in automobile manufacturing, for attaching components of a wide variety of types in a simple manner to a support part provided with a hole. In this context, the installation should be possible by means of a simple insertion process with little force, and the installed retaining element should be able to transfer the maximum possible retaining forces to the support part. Since the thickness of the support parts, and hence, the length of the mounting hole, varies widely, an additional requirement is for the retaining element to be designed such that it is equally suitable for a variety of hole lengths. It is also required for the retaining element to be usable with different hole diameters.

Known from WO 2007/070207 A1 is a retaining element of the initially mentioned type, which has a shaft with multiple retaining arms that are set at an angle to the shaft and are arranged on both sides of a stabilizing base located approximately in the center of the shaft. The stabilizing base here can take the form of a rigid ring that extends around the circumference of the shaft, or that consists of arms projecting from the shaft at right angles, which are offset relative to one another in the longitudinal direction of the shaft. The retaining arms may be braced against the stabilizing base, increasing the resistance that they produce to the retaining element being pulled out of the mounting hole. A disadvantage here is that the stabilizing base must be made very stiff in order to achieve a significant supporting action. Furthermore, the radial extent of the stabilizing base must be smaller than the diameter of the mounting hole in which the retaining element can be placed.

A retaining element for insertion into a preformed opening in a workpiece according to the preamble of claim 1 is disclosed in EP 0 064 768 A2 and EP 0 365 161 A2. The retaining element comprises an axially elongated rigid shank having a head end and a free end A series of flexible wing members extend laterally from the shank to a radial extent greater than the cross-section of the opening. Abutment stops shaped to have substantial rigidity are located between adjacent wing members to prevent their flexure toward the free end and to increase resistance to removal of the retaining element.

DE 196 07 516 A1 discloses a fastener comprising a shank receivable in a borehole and having a head piece and a front end. Series of flaps are arranged at equal distance on opposite sides of the shank and are movably connected to the shank by flexible links. Strutting flaps extend parallel to the shank from the center of the flaps on the side facing the front end of the shank. The strutting flaps have a length shorter than the distance between the flaps and can either abut with their front ends the adjacent flap or the shank depending on their bending caused by the inner wall of the borehole in which the fastener is received. The strutting flaps are adapted to increase the radial spreading force of the flaps.

The object of the invention is to create a retaining element of the initially mentioned type that permits a large holding force with small insertion force. The retaining element should be suitable for different hole diameters and hole lengths, and should be simple and economical to produce.

The object is attained by a retaining element with the features specified in claim 1. Advantageous embodiments of the retaining element are specified in the additional claims.

According to the invention, the at least one support element is connected to the shaft in an elastically flexible manner and carries a locking tooth at its free end, and the at least one retaining arm has, between its ends, a locking recess opposite the locking tooth, the locking recess and the locking tooth being cooperating locking means that engage one another in an interlocking manner when the at least one retaining arm is pressed against the at least one support element in order to prevent a relative motion between the at least one retaining arm and the at least one support element.

The design according to the invention has the advantage that the support element is stressed primarily in compression and to a lesser extent in bending when supporting the retaining arm. In this way, an especially stiff support is achieved and greater support forces can be handled. A significantly higher resistance to the retaining element being pulled out of the mounting hole can be achieved in comparison with known retaining elements.

The design according to the invention also has the advantage that the support element and/or its attachment to the shaft can be less stiff in their configuration. Consequently, the support element can be bent towards the shaft during installation of the retaining element, as can the retaining arm. As a result, the retaining element can also be used in holes having inside diameters smaller than the outside diameter in the region of the support element or support elements. Moreover, the flexibility of the support element contributes to achieving a lower insertion force in that the flexible support elements do not hinder the bending of the retaining arms, but instead can be bent toward the shaft by them.

The at least one support element is an arm projecting from the shaft, the length of which is shorter than the length of the at least one retaining arm. The design of the retaining element is simple and economical to produce. The retaining element according to the invention can advantageously be produced as a single piece from a thermoplastic maternal.

According to the invention, provision can also be made for the at least one retaining arm and the at least one support element to be inclined toward the head end of the shaft at an angle of inclination of less than 90° to the longitudinal axis. This arrangement facilitates easy insertion and the achievement of a high holding force. Preferably, the angle of inclination is less than 60°.

It has further proven to be advantageous for the angle of inclination of the at least one support element to be smaller than the angle of inclination of the at least one retaining arm. The resultant steeper position of the support element as compared to the retaining arm reduces the distance between the cooperating locking means and increases the resistance to pull-out.

According to the invention, the at least one support element is connected to the shaft in an elastically flexible manner. In this way, it can deflect during insertion of the retaining element, but can itself be made sufficiently stiff in bending to be able to withstand high supporting forces when supporting the retaining arm.

Preferably, according to the invention a plurality of retaining arms and support elements are arranged along the length of the shaft symmetrically to the longitudinal axis of the shaft, wherein one support element is adjacent to each retaining arm on the side facing the foot end. As a result of such an arrangement, the retaining element can be inserted in mounting holes of different lengths, wherein different retaining arms accomplish the retention of the retaining element for different lengths of the mounting hole.

According to another proposal of the invention, a head part having a contact surface for the workpiece facing the shaft can be molded onto the head end of the shaft. The head part in this design can have elastic sections that provide contact with the workpiece. Furthermore, the head part can have any desired fastening means for fastening a workpiece that is located on the side of the head part facing away from the shaft.

The invention is explained in detail below on the basis of an example embodiment, which is shown in the drawings. They show:

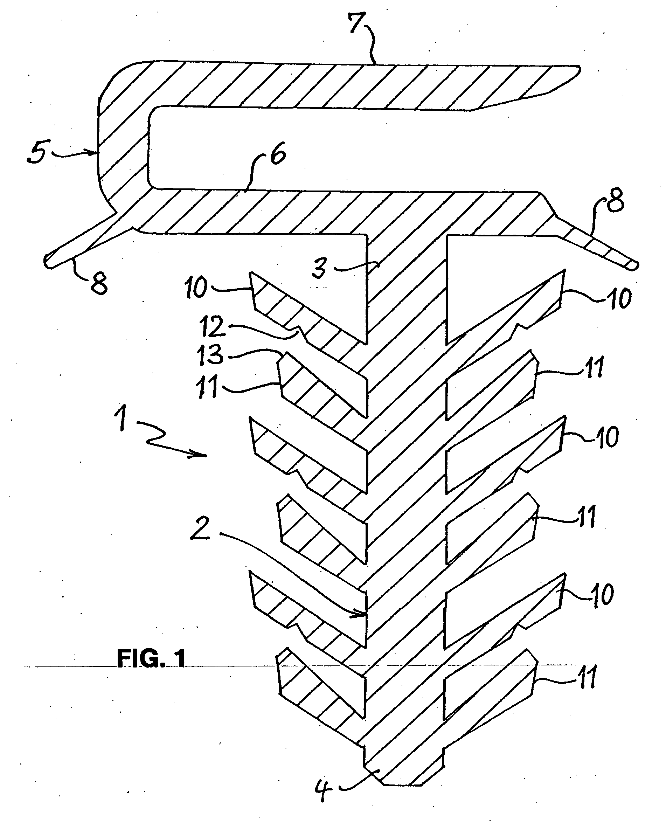

- Fig. 1: a cross-section through a retaining element according to the invention, and
- Fig. 2: an installation situation of the retaining element from Fig. 1.

The drawing shows a retaining element 1 with an elongated shaft 2 that has a head end 3 and a foot end 4. Attached to the head end 3 of the shaft 2 is a head part 5 with a flange section 6 extending perpendicularly to the shaft and with a fastening section 7. The flange section 6 has elastic fingers 8 at opposite ends that provide support against a workpiece. The fastening section 7 has the shape of a hook. Any other desired design of fastening means may be used in its stead.

Located along the shaft 2 on opposite sides and essentially symmetrically to the longitudinal axis of the shaft 2 are multiple retaining arms 10 and multiple support elements 11, always arranged in alternation and at a distance from one another. The arrangement is such that every retaining arm 10 is followed, in the direction of the foot end 4, by a support element 11. The retaining arms 10 and the support elements 11 are molded onto the shaft 2 and have approximately the same width in the circum-ferential direction. The retaining arms 10 are elastically flexible. The support elements 11 are stiffer so that they cannot buckle, and are attached to the shaft 2 by elastically flexible sections. The retaining arms 10 and the support elements 11 extend radially outward from the shaft 2 and are inclined relative to the longitudinal axis of the shaft 2 such that they approach the head end 3 with increasing distance from the shaft 2. The angle of inclination of the retaining arms 10 to the longitudinal axis of the shaft 2 is essentially 60°, however it may also be larger or significantly smaller. The angle of inclination of the support elements 11 is preferably somewhat smaller than the angle of inclination of the retaining arms 10. This results in a smaller spacing between the free ends of the support elements 11 and the retaining arms 10 to be supported. The retaining arms 10 each have a locking recess 12 on their underside facing the foot ends and at a distance from their free ends. Located opposite the locking recesses 12 are locking teeth 13, which are formed on the ends of the support elements 11 and have a shorter length than the retaining arms 10.

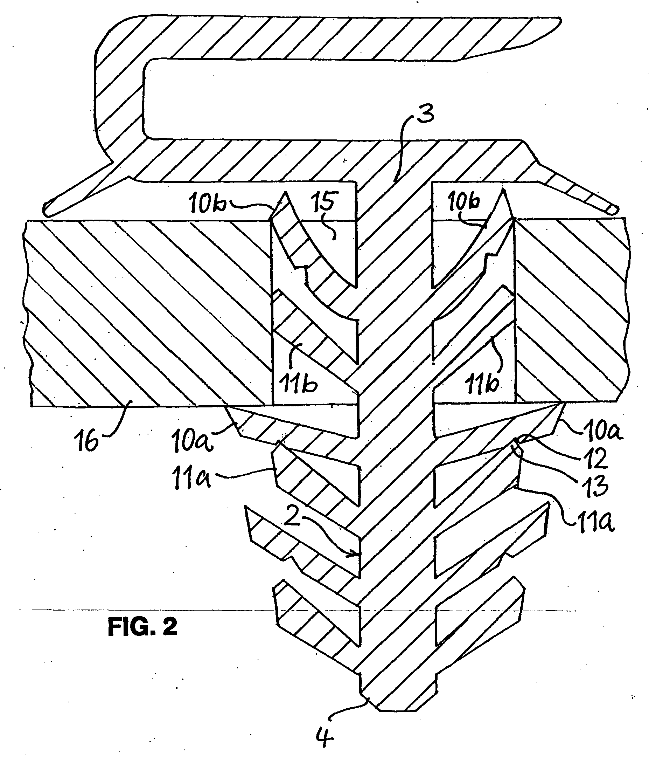

To fasten the retaining element 1, as is shown in Figure 2, it is inserted in a hole 15 in a workpiece 16. The hole has an inside diameter that is significantly smaller than the outside diameter of a cylinder touching the free ends of the retaining arms 10. If possible, the inside diameter of the hole 15 should be no larger than the diameter of a cylinder that touches the free ends of the support elements 11, in order to ensure effective support and good centering of the retaining element 1 in the hole 15. The inside diameter of the hole 15 can also be significantly smaller, however, to a limit at which the retaining arms 10 and the support elements 11 can no longer be bent far enough towards the shaft 2 to permit the entry of the retaining element 1 in the hole in the workpiece.

In the example shown in Figure 2, the shaft 2 of the retaining element 1 is inserted far enough into the hole 15 that the retaining arms 10a located approximately in the center of the shaft 2 take on the retaining function. The retaining arms 10b and the support elements 11 b are located inside the hole 15, where they provide centering and radial support of the retaining element 1. In the axial direction, the retaining element 1 is supported against the workpiece 16 in the direction of insertion via the fingers 8. In the opposite direction, the retaining arms 10a resting against the workpiece 16 hold the retaining element 1 in place.

If the retaining element 1 is loaded opposite the direction of insertion with a force that cannot be supported by the retaining arms 10a alone, the retaining elements 10a are bent toward the support elements 11 a until they come into contact with them and the locking teeth 13 of the support elements 11 a engage in the locking recesses 12 of the retaining arms 10a. In this way, the retaining arms 10a and the support elements 11a together form a stiff brace in the manner of a truss, which can support relatively high forces, wherein the support elements 11 a are stressed primarily in compression and the retaining arms 10a are stressed primarily in bending and in tension.

The design of the retaining element 1 described thus guarantees a high resistance to pull-out from the mounting hole, while at the same time the resistance to insertion of the retaining element 1 in the mounting hole remains low, since the retaining arms and the support elements can be bent during insertion.

## Claims

1. Retaining element (1) for attachment in a hole of a workpiece, with a shaft (2) that has a head end (3), a foot end (4), and a longitudinal axis, with at least one elastically flexible retaining arm (10) that is attached to the shaft (2) and projects obliquely from the longitudinal axis of the shaft (2), and with at least one support element (11) that is located on the side of the at least one retaining arm (10) facing the foot end (4) and at a distance therefrom, the at least one support element (11) is an arm projecting from the shaft (2), and forms a support for the retaining arm (10), **characterized in that**, the at least one support element (11) is connected to the shaft (2) in an elastically flexible manner and carries a locking tooth (13) at its free end, and the at least one retaining arm (10) has, between its ends, a locking recess (12) opposite the locking tooth (13), the locking recess (12) and the locking tooth (13) being cooperating locking means that engage one another in an interlocking manner when the at least one retaining arm (10) is pressed against the at least one support element (11) in order to prevent a relative motion between the at least one retaining arm (10) and the at least one support element (11).

2. Retaining element according to claim 1, **characterized in that** the length of the arm of the at least one support element (11) is shorter than the length of the at least one retaining arm (10).

3. Retaining element according to one of the preceding claims, **characterized in that** the at least one retaining arm (10) and the at least one support element (11) are inclined towards the head end (3) of the shaft (2) at an angle of inclination of less than 90° to the longitudinal axis.

4. Retaining element according to claim 3, **characterized in that** the angle of inclination of the at least one support element (11) is smaller than the angle of inclination of the at least one retaining arm (10).

5. Retaining element according to one of the preceding claims, **characterized in that** a plurality of retaining arms (10) and support elements (11) are arranged symmetrically to the longitudinal axis along the length of the shaft (2), wherein one support element (11) is adjacent to each retaining arm (10) on the side facing the foot end (4).

6. Retaining element according to one of the preceding claims, **characterized in that** a head part (5) having a contact surface facing the shaft for contacting a workpiece is molded onto the head end (3) of the shaft (2).

7. Retaining element according to claim 6, **characterized in that** the head part (5) has elastic sections (8) that provide support for the workpiece.

8. Retaining element according to one of the preceding claims, **characterized in that** the head part (5) has fastening means (7) for fastening a workpiece that is located on the side of the head part (5) facing away from the shaft (2).

## Patentansprüche

1. Halteelement (1) zur Befestigung in einem Loch eines Werkstücks mit einem Schaft (2), der ein Kopfende (3), ein Fußende (4) und eine Längsachse aufweist, mit wenigstens einem elastisch biegbaren Haltearm (10), der an dem Schaft (2) befestigt ist und quer zur Längsachse von dem Schaft (2) absteht und mit wenigstens einem Stützelement (11), das auf der dem Fußende (4) zugekehrten Seite des wenigstens einen Haltearms (10) und in einem Abstand von diesem angeordnet ist, das wenigstens eine Stützelement (11) ein vom Schaft (2) abstehender Arm und bildez eine Stütze für den Haltearm (10), **dadurch gekennzeichnet, dass** das wenigstens eine Stützelement (11) elastisch biegbar mit dem Schaft (2) verbunden ist und an seinem freien Ende einen Sperrzahn (13) trägt und der wenigstens eine Haltearm (10) zwischen seinen Enden eine dem Sperrzahn (13) gegenüberliegende Sperrausnehmung (12) aufweist, die Sperrausnehmung (12) und der Sperrzahn (13) zusammenwirkende Sperrmittel sind, die formschlüssig ineinander greifen, wenn der wenigstens eine Haltearm (10) gegen das wenigstens eine Stützelement (11) gedrückt wird, um eine Relativbewegung zwischen dem wenigstens einen Haltearm (10) und dem wenigstens einen Stützelement (11) zu verhindern.

2. Halteelement nach Anspruch 1, **dadurch gekennzeichnet, dass** die Länge des Arms des wenigstens einen Stützelements (11) kleiner ist als die Länge des wenigstens einen Haltearms (10).

3. Halteelement nach einem der vorhergehenden Ansprüche, **dadurch gekennzeichnet, dass** der wenigstens eine Haltearm (10) und das wenigstens eine Stützelement (11) in einem Neigungswinkel von kleiner 90° zur Längsachse in Richtung des Kopfendes (3) des Schafts (2) geneigt sind.

4. Halteelement nach Anspruch 3, **dadurch gekennzeichnet, dass** der Neigungswinkel des wenigstens einen Stützelements (11) kleiner ist als der Neigungswinkel des wenigstens einen Haltearms (10).

5. Halteelement nach einem der vorhergehenden Ansprüche, **dadurch gekennzeichnet, dass** längs des Schafts (2) eine Vielzahl von Haltearmen (10) und Stützelementen (11) symmetrisch zur Längsachse angeordnet ist, wobei jedem Haltearm (10) auf der dem Fußende (4) zugekehrten Seite jeweils ein Stützelement (11) benachbart ist.

6. Halteelement nach einem der vorhergehenden Ansprüche, **dadurch gekennzeichnet, dass** am Kopfende (3) des Schafts (2) ein Kopfteil (5) mit einer dem Schaft zugekehrten Anlagefläche für ein Werkstück angeformt ist.

7. Halteelement nach Anspruch 6, **dadurch gekennzeichnet, dass** das Kopfteil (5) federnde Abschnitte (8) aufweist, welche eine Anlage für das Werkstück bilden.

8. Halteelement nach einem der vorhergehenden Ansprüche, **dadurch gekennzeichnet, dass** das Kopfteil (5) Befestigungsmittel (7) zur Befestigung eines auf der dem Schaft (2) abgekehrten Seite des Kopfteils (5) angeordneten Werkstücks aufweist.

## Revendications

1. Elément de retenue (1) pour fixation dans un trou d'une pièce, avec un arbre (2) qui présente une extrémité tête (3), une extrémité pied (4) et un axe longitudinal, avec au moins un bras de retenue élastiquement flexible (10) qui est fixé à l'arbre (2) et fait saillie obliquement depuis l'axe longitudinal de l'arbre (2), et avec au moins un élément de support (11) qui se situe sur le côté de l'au moins un arbre de retenue (10) tourné vers l'extrémité pied (4) et à une distance de celle-ci, l'au moins un élément de support (11) est un bras faisant saillie depuis l'arbre (2), et forme un support pour le bras de retenue (10), **caractérisé en ce que** l'au moins un élément de support (11) est relié à l'arbre (2) d'une manière élastiquement flexible et porte une dent de blocage (13) à son extrémité libre, et l'au moins un bras de retenue (10) comporte, entre ses extrémités, un évidement de blocage (12) opposé à la dent de blocage (13), l'évidement de blocage (12) et la dent de blocage (13) étant des moyens de blocage en coopération qui entrent en prise l'un avec l'autre d'une manière enclenchée quand l'au moins un bras de retenue (10) est pressé contre l'au moins un élément de support (11) afin d'empêcher un mouvement relatif entre l'au moins un bras de retenue (10) et l'au moins un élément de support (11).

2. Elément de retenue selon la revendication 1, **caractérisé en ce que** la longueur du bras de l'au moins un élément de support (11) est plus courte que la longueur de l'au moins un bras de retenue (10).

3. Elément de retenue selon l'une des revendications précédentes, **caractérisé en ce que** l'au moins un bras de retenue (10) et l'au moins un élément de support (11) sont inclinés vers l'extrémité tête (3) de l'arbre selon un angle d'inclinaison de moins de 90° par rapport à l'axe longitudinal.

4. Elément de retenue selon la revendication 3, **caractérisé en ce que** l'angle d'inclinaison de l'au moins un élément de support (11) est plus petit que l'angle d'inclinaison de l'au moins un bras de retenue (10).

5. Elément de retenue selon l'une des revendications précédentes, **caractérisé en ce qu'**une pluralité de bras de retenue (10) et d'éléments de support (11) sont agencés de façon symétrique à l'axe longitudinal suivant la longueur de l'arbre (2), dans lequel un élément de support (11) est adjacent à chaque bras de retenue (10) sur le côté tourné vers l'extrémité pied (4).

6. Elément de retenue selon l'une des revendications précédentes, **caractérisé en ce qu'**une partie de tête (5) ayant une surface de contact tournée vers l'arbre pour être en contact avec une pièce est moulée sur l'extrémité tête (3) de l'arbre (2).

7. Elément de retenue selon la revendication 6, caractérisé en ce la partie de tête (5) possède des sections élastiques (8) qui offrent un support pour la pièce.

8. Elément de retenue selon l'une des revendications précédentes, **caractérisé en ce que** la partie de tête (5) comporte un moyen de fixation (7) pour fixer une pièce qui se situe sur le côté de la partie de tête (5) détourné de l'arbre (2).
